Europäisches Patentamt

European Patent Office

Office européen des brevets

(11) Publication number: **0 275 673**
**A1**

## EUROPEAN PATENT APPLICATION

(21) Application number: **87311109.0**

(22) Date of filing: **17.12.87**

(51) Int. Cl.⁴: **G02B 3/00 , H04B 9/00**

(30) Priority: **17.12.86 GB 8630152**

(43) Date of publication of application:
**27.07.88 Bulletin  88/30**

(84) Designated Contracting States:
**AT BE CH DE ES FR GR IT LI LU NL SE**

(71) Applicant: **The General Electric Company, p.l.c.**
**1 Stanhope Gate**
**London W1A 1EH(GB)**

(72) Inventor: **Bennett, Matthew John**
**5 Hampton Rise**
**Kenton HA3 0SB(GB)**

(74) Representative: **Hoste, Colin Francis**
**The General Electric Company p.l.c. Central**
**Patent Department (Wembley Office) Hirst**
**Research Centre East Lane**
**Wembley Middlesex, HA9 7PP(GB)**

(54) **Optical communication systems.**

(57) In a free-space optical communication system utilising infra-red wavelengths a lens (2) used for directing optical signal energy, for example onto a detector device, has one surface formed with a profile in one plane at least such that the beam width in that plane of the incident optical energy that is directed onto the detector device, over a predetermined range of angles of incidence, is greater than a predetermined minimum value. The lens may have different profiles in two orthogonal planes, such that optical energy is directed effectively onto the detector device from a wider range of angles of incidence in one of those two planes than in the other.

Fig. 2

$$W(\theta) = \left[f(u) - f(v)\right]\sin\theta + (v-u)\cos\theta.$$

## Optical Communication Systems

The present invention relates to optical communication systems.

In particular, although not exclusively, the invention relates to transmitter and receiver arrangements for free-space optical communication systems utilizing infra-red wavelengths. Such communication systems may be utilised to enable short-range communication within, say, a conference hall, or to act as a cordless hearing aid.

According to one aspect of the present invention in a free-space optical communication system including one or more optical signal transmitter devices and one or more optical receiver devices, a lens is mounted to direct optical energy transmitted by a transmitter device, or to direct incident optical energy onto a detector device, one surface of said lens being formed with a profile in one plane at least such as to give greater magnification over a range of directions off the optical axis of said lens than in the direction of said optical axis.

According to another aspect of the present invention in a receiver arrangement for a free-space optical communication system including an optical detector device, a lens is mounted to direct incident optical energy onto said detector device, one surface of said lens being formed with different profiles in two orthogonal planes such that incident optical energy is directed effectively onto said detector device from a wider range of angles of incidence in one of said planes than in the other of said planes.

According to another aspect of the present invention in a receiver arrangement for a free-space optical communication system including a substantially planar optical detector device having a given linear dimension in a given direction, there is provided a lens mounted to direct incident optical energy onto said detector device, one surface of said lens being formed with a profile in a plane including said given direction such that in respect of optical energy incident upon said surface from any given angle of incidence within a predetermined range of angles of incidence in said plane the beam width of said incident optical energy that is directed onto said optical detector is greater than a predetermined minimum value.

Preferably said profile is in the form of part of a symmetrical polynominal curve the coefficients of which polynomial are selected to achieve or to maximise said minimum value.

An optical communication system and a receiver arrangement for an optical communication system, both in accordance with the present invention, will now be described by way of example with reference to the accompanying drawings, of which:-

Figure 1 shows diagrammatically a receiver arrangement including a lens;

Figure 2 illustrates diagrammatically the function of the lens shown in Figure 1;

Figures 3 and 4 show diagrammatically the profile of the lens shown in Figure 1 respectively in two orthogonal planes;

Figure 5 shows tabulated polynomial coefficient values which define the profiles shown in Figures 3 and 4; and

Figures 6 and 7 show curves illustrating the effectiveness of the lens in the two orthogonal planes, and

Figure 8 shows schematically an integrated infra-red communication system.

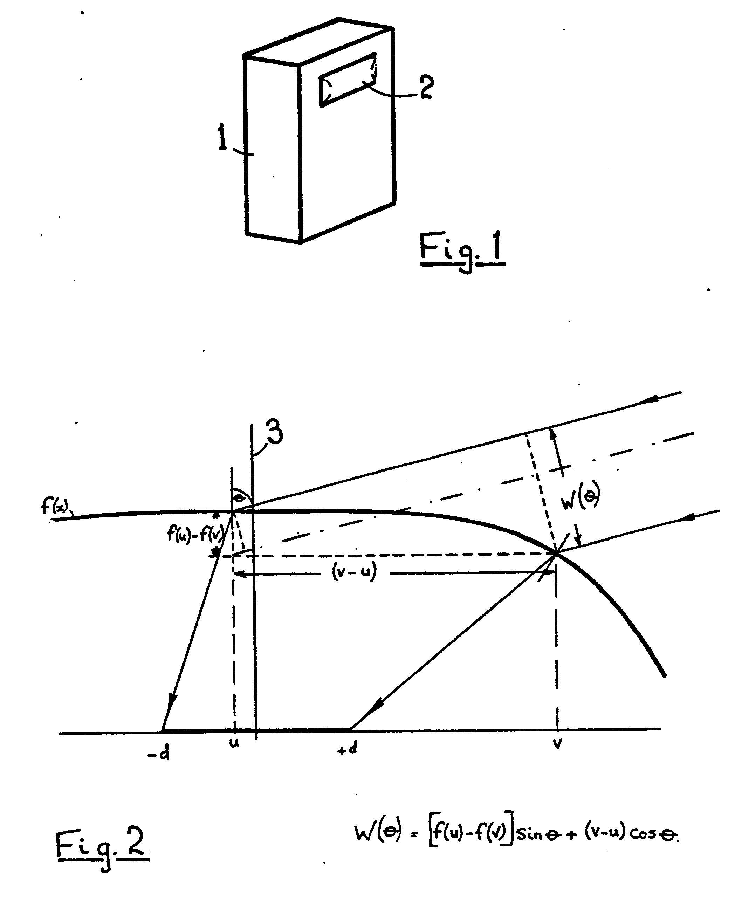

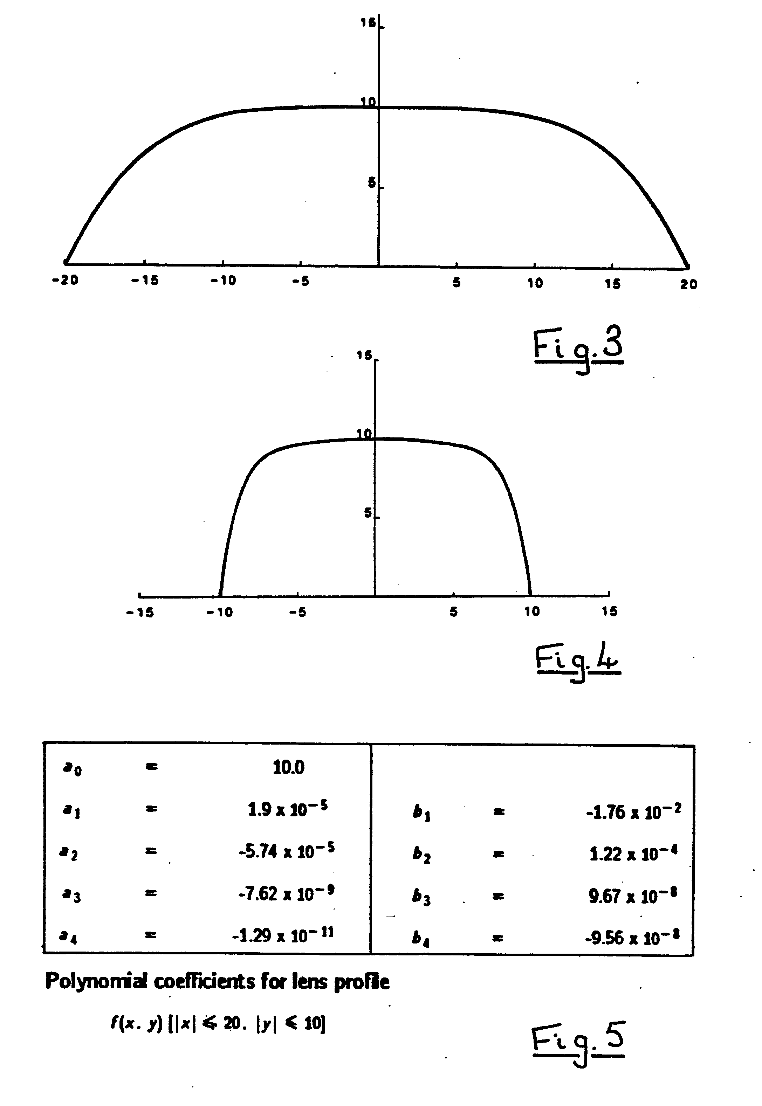

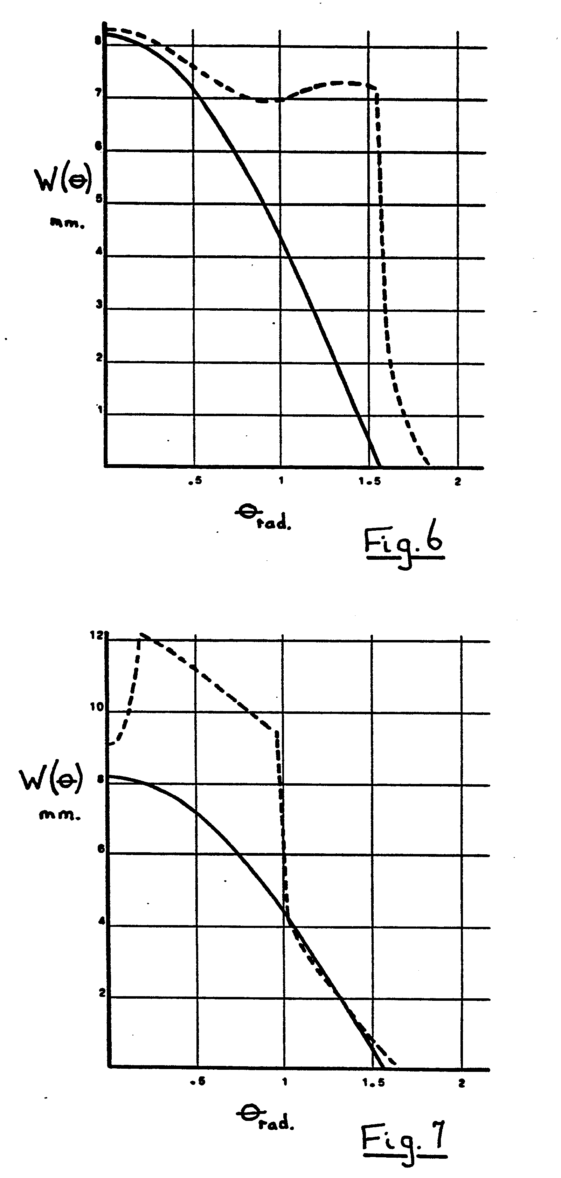

Referring first to Figure 1, the receiver arrangement, represented by the box 1, forms part of a cordless hearing-aid system, in which signals to be conveyed from a source such as a television set to a person carrying the receiver arrangement are amplitude modulated onto an infra-red carrier signal which is "broadcast" by the source (not shown). The receiver arrangement includes an infra-red signal detector device (not shown), which may be a substantially planar device some 8.7mm square, mounted at or near the outer surface of the box 1, over which is mounted a lens 2 to direct infra-red energy into the detector device. The detector device may be required to respond to infra-red signals across a full 180° range of acceptance angles in the horizontal plane, whereas in the vertical plane it is desirable that the range of acceptance angles be restricted to, say, 100° to avoid interference from fluorescent room lights.

In view of these considerations the profile of the lens 2 is required to maximise the minimum effective area of the detector device, as aided by the lens 2, over the required range of acceptance angles. The design process is simplified by considering the profile required only in orthogonal horizontal and vertical planes, the resulting lens profiles having the advantages that they can be produced by two sequential milling operations.

For the optimisation of the two profiles each is modelled as a symmetric polynominal, so that the overall shape of the lens may be represented as:-

$$f(x,y) = a_0 + \min\left[\sum_{n=1}^{4} a_n \cdot x^{2n}, \sum_{m=1}^{4} b_m \cdot y^{2m}\right]$$

Optimisation of the acceptance patterns in the horizontal and vertical planes is achieved by working separately with $f(x,0)$ and $f(0,y)$ respectively. The constant $a_0$ is of course the same in each case.

As indicated in Figure 2, the "effective area reduces in each plane to an "effective width" $W(\theta)$. For a lens profile $f(x)$, which is assumed to be symmetrical about the "straight ahead" axis 3, and a detector width of $2d$, the effective width in respect of any acceptance angle $\theta$ can be expressed as:-
$W(\theta) = [f(u) - f(v)] \sin \theta + (v - u) \cos \theta$.

In order to simplify the analysis it is assumed that the lens profile casts no shadows on the detector device. It is possible, however, that at certain angles of acceptance there will be more than one path through the lens 2 to a particular point on the detector device, in which case "effective width" will simply be the total of all the separate contributions.

The optimisation procedure comprises calculating the values of $W(\theta)$ for angles inside the desired range of acceptance angles, taking the minimum of these values, $W_{min}(\theta)$, and then searching the "space" of possible profile functions $f(x)$ to find the maximum value for $W_{min}(\theta)$.

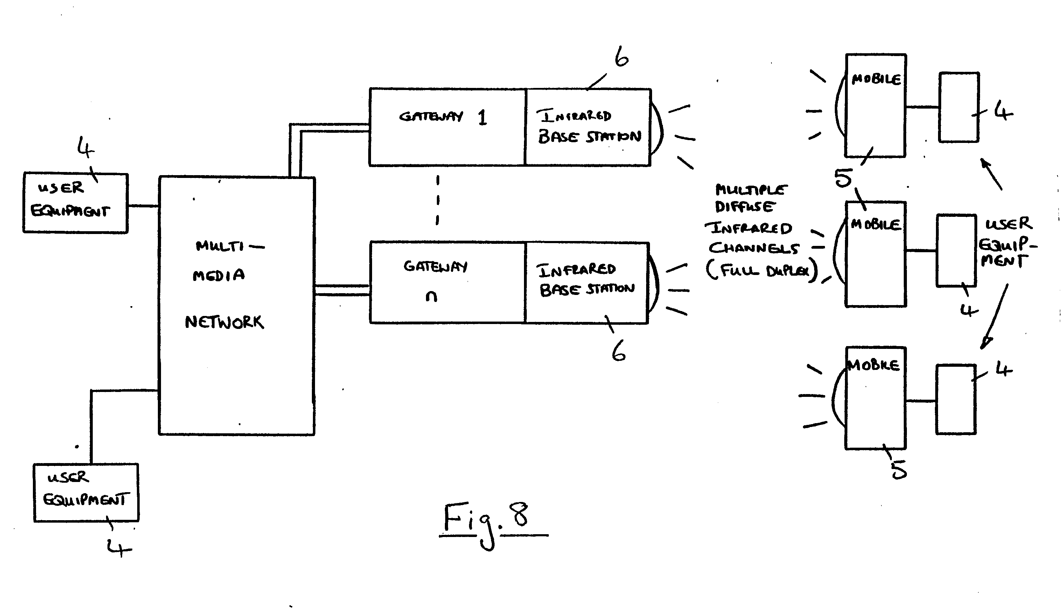

Figure 5 shows a set of coefficients $a_n$ and $b_m$ for the symmetric polynomial for a lens 2 having a rectangular base 40mm by 20mm and a height of 10mm, while Figures 3 and 4 give the corresponding profiles in the horizontal and vertical planes respectively. Figures 6 and 7 show the effective width in millimetres of the detector/lens combination (dashed lines) over a range of acceptance angles $\theta$, expressed in radians, from the straight-ahead direction, in the horizontal and vertical planes respectively. The solid lines in Figures 6 and 7 show the effective width of the detector without the lens.

Referring now to Figure 8 infra-red communication links may form part of an integrated system in which information, whether originally of analogue or of digital form, is transmitted between user equipment units 4 some of which may be associated with mobile transmitter/receivers 5. Infra-red base stations 6 may be provided one or more per room or zone, or addition transporters (not shown) or reflectors (not shown) may be used to increase coverage by any one base station 6.

The information to be transmitted may be audio/visual, or between data terminals, or in respect of domestic appliances, security angles or energy management systems. The infra-red links will in general utilise digital signalling, in formats compatible with the now conventional digital telephone networks.

The base station lenses may be shaped to achieve coverage of their respective zones, maximising received signal energy while rejecting as far as possible energy from interfering sources such as sunlight and room lighting, while the mobile station lenses will be required to minimise signal level fluctuations with changes in orientation. Different forms of lens may be used for the transmitter and receiver devices at any one station.

## Claims

1. A free-space optical communication system including one or more optical signal transmitter devices and one or more optical receiver devices, wherein a lens is mounted to direct optical energy transmitted by a transmitter device, or to direct incident optical energy onto a detector device, one surface of said lens being formed with a profile, in one plane at least, such as to given greater magnification over a range of directions off the optical axis of said lens than in the direction of said optical axis.

2. A receiver arrangement for a free-space optical communication system including an optical detector device, wherein a lens is mounted to direct incident optical energy onto said detector device, one surface of said lens being formed with different profiles in two orthogonal planes such that incident optical energy is directed effectively onto said detector device from a wider range of angles of incidence in one of said planes than in the other of said planes.

3. A receiver arrangement for a free-space optical communication system including a substantially planar optical detector device having a given linear dimension in a given direction, wherein there is provided a lens mounted to direct incident optical energy onto said detector device, one surface of said lens being formed with a profile in a plane including a said given direction such that in respect of optical energy incident upon said surface from any given angle of incidence within a predetermined range of angles of incidence in said plane the beam width of said incident optical energy that is directed onto said optical detector is greater than a predetermined minimum value.

4. A receiver arrangement in accordance with Claim 3 wherein said profile is in the form of part of a symmetrical polynomial curve the coefficients of which polynomial are selected to achieve or to maximise said minimum value.

$$\underline{Fig.1}$$

$$\underline{Fig.2}$$

$$W(\theta) = \left[f(u)-f(v)\right]\sin\theta + (v-u)\cos\theta.$$

Fig.3

Fig.4

| $a_0$ | = | 10.0 | | | |
|---|---|---|---|---|---|
| $a_1$ | = | $1.9 \times 10^{-5}$ | $b_1$ | = | $-1.76 \times 10^{-2}$ |
| $a_2$ | = | $-5.74 \times 10^{-5}$ | $b_2$ | = | $1.22 \times 10^{-4}$ |
| $a_3$ | = | $-7.62 \times 10^{-9}$ | $b_3$ | = | $9.67 \times 10^{-8}$ |
| $a_4$ | = | $-1.29 \times 10^{-11}$ | $b_4$ | = | $-9.56 \times 10^{-8}$ |

Polynomial coefficients for lens profile

$f(x, y) [|x| \leqslant 20, |y| \leqslant 10]$

Fig.5

Fig. 6

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 110 814 (J.B. KENNON) <br> * Column 3, lines 20-50; claims; figures * | 1 | G 02 B 3/00 <br> H 04 B 9/00 |
| A | | 2,3 | |
| Y | CH-A- 599 643 (CERBERUS) <br> * Claims; figure * | 1 | |

**TECHNICAL FIELDS SEARCHED (Int. Cl.4)**

G 02 B
H 04 B

The present search report has been drawn up for all claims

| Place of search | Date of completion of the search | Examiner |
|---|---|---|
| THE HAGUE | 22-03-1988 | PFAHLER R. |